# EUROPÄISCHE PATENTANMELDUNG

(11) **EP 1 065 109 A2**
(43) Veröffentlichungstag der Anmeldung: **03.01.2001**
(21) Anmeldenummer: 00113045.9
(22) Anmeldetag: 23.06.2000
(51) Int. Cl.: B60R 21/06

(54) **Laderaumabtrennung für ein Kraftfahrzeug**

(30) Priorität: 01.07.1999 DE 19930107
(71) Anmelder: BOS GmbH & Co. KG, 73773 Aichwald (DE)
(72) Erfinder: Ehrenberger, Marina, 73730 Esslingen (DE); Seel, Holger, 71134 Aidlingen (DE)
(74) Vertreter: Wilhelm & Dauster Patentanwälte European Patent Attorneys

(57) **Zusammenfassung**

Eine Laderaumabtrennung für ein Kraftfahrzeug mit einem flexiblen Flächengebilde (7), das in einem frontseitigen Stirnbereich mit einem Auszugprofil (5) versehen ist, das Halteelemente (8) zur lösbaren Festlegung des Auszugprofiles an fahrzeugfesten Halterungen (6) in einem Dachbereich (3) des Kraftfahrzeugs aufweist, ist bekannt.

Erfindungsgemäß ragen die Halteelemente (8) im ausgezogenen Funktionszustand des Flächengebildes (7) über eine Oberkante des Auszugprofiles (5) nach oben ab, und die korrespondierenden fahrzeugfesten Halterungen (6) sind zur Aufnahme der Halteelemente (8) in einem horizontalen Dachhimmelbereich (3) in Abstand zu seitlichen Dachrahmenteilen des Dachbereiches des Kraftfahrzeugs positioniert.

## Beschreibung

Die Erfindung betrifft eine Laderaumabtrennung für ein Kraftfahrzeug, mit wenigstens einem auf einer fahrzeugfest gelagerten Rollowelle auf- und abwickelbar angeordneten, flexiblen Flächengebilde, das in einem frontseitigen Stirnbereich mit einem formstabilen, sich über die gesamte Breite des Flächengebildes erstreckenden Auszugprofil versehen ist, das Halteelemente zur lösbaren Festlegung des Auszugprofiles im ausgezogenen Funktionszustand des Flächengebildes an fahrzeugfesten Halterungen in einem Dachhereich des Kraftfahrzeugs aufweist.

Eine solche Laderaumabtrennung ist bei Kombi-Personenkraftwagen allgemein bekannt. Eine solche Laderaumabtrennung weist ein flexibles Flächengebilde in Form eines Trenn-Netzes auf, das auf- und abwickelbar auf einer Rollowelle angeordnet ist. Die Rollowelle ist fahrzeugfest gelagert. Dabei ist die Rollowelle vorzugsweise in einem fahrzeugfest positionierten Kassettengehäuse integriert, das im Bereich seiner Oberseite mit einem in Fahrzeugquerrichtung verlaufenden Längsschlitz für den Durchtritt des Trenn-Netzes versehen ist. Am frontseitigen Stirnbereich des Trenn-Netzes ist ein Auszugprofil vorgesehen, das an seinen beiden gegenüberliegenden Seiten mit jeweils einem Halteelement in Form eines Einhängekopfes versehen ist. Den Einhängeköpfen sind als fahrzeugfeste Halterungen korrespondierende Aufnahmen im Dachbereich, und zwar jeweils seitlich auf Höhe der seitlichen Dachrahmenteile zugeordnet. Beim Hochziehen des Auszugprofiles und des Trenn-Netzes in den Funktionszustand des Trenn-Netzes werden die Halteelemente des Auszugprofiles nach Erreichen des ausgezogenen Funktionszustandes in die seitlichen, fahrzeugfesten Halterungen eingehängt.

Es ist bei Kombi-Personenkraftwagen der Marke BMW, 5er touring, auch bekannt, zwei Trenn-Netze nebeneinander zu Positionieren, die auf unabhängig voneinander drehbar gelagerten Rollowellen in einem gemeinsamen Kassettengehäuse angeordnet sind. Das eine Trenn-Netz ist mit einem ausziehbaren Auszugprofil versehen, das sich im ausgezogenen Zustand über die gesamte Breite des Kraftfahrzeugs erstreckt und ebenfalls mittels entsprechender Halteelemente in seitlichen, dachrahmenfesten Halterungen einhängbar ist. Das zweite Trenn-Netz wird bei Bedarf in das Auszugprofil des ersten Trenn-Netzes eingehängt.

Aufgabe der Erfindung ist es, eine Laderaumabtrennung der eingangs genannten Art zu schaffen, die eine gegenüber dem Stand der Technik vereinfachte Halterung bei gleichzeitiger Schaffung der Möglichkeit und der Positionierung von wenigstens zwei in Fahrzeugquerrichtung nebeneinander angeordneten, flexiblen Flächengebilden aufweist.

Diese Aufgabe wird dadurch gelöst, daß die Halteelemente im ausgezogenen Funktionszustand des Flächengebildes über eine Oberkante des Auszugprofiles nach oben abragen, und daß die korrespondierenden fahrzeugfesten Halterungen zur Aufnahme der Halteelemente in einem horizontalen Dachhimmelbereich in Abstand zu seitlichen Dachrahmenteilen des Dachbereiches des Kraftfahrzeugs positioniert sind. Durch die erfindungsgemäße Lösung ragen die Halteelemente nicht mehr - wie beim Stand der Technik - seitlich über die Kontur des Auszugprofiles hinaus, sondern vielmehr nach oben von dem Auszugprofil ab. Dabei können die Halteelemente sowohl starr als auch beweglich an dem Auszugprofil angeordnet sein, so daß sie entweder sowohl in der Ruheposition als auch im Funktionszustand des Flächengebildes von dem Auszugprofil nach oben abragen, oder lediglich bei Überführung des Auszugprofiles in den ausgezogenen Funktionszustand des Flächengebildes in die Funktionsposition bewegt werden. Durch die Anordnung der korrespondierenden, fahrzeugfesten Halterungen im horizontalen Dachhimmelbereich in Abstand zu den seitlichen Dachrahmenteilen der Fahrzeugkarosserie ist es möglich, die fahrzeugfesten Halterungen über die Breite des Dachhimmelbereiches verteilt anzuordnen. Dadurch können auch zwei oder mehr nebeneinander angeordnete Flächengebilde jeweils unabhängig voneinander im Dachbereich eingehängt werden. Ein ausziehbares Auszugprofil, wie es beim Stand der Technik für die Halterung von zwei Trenn-Netzen vorgesehen ist, ist daher nicht mehr notwendig.

In Ausgestaltung der Erfindung sind die Halteelemente zwischen einer in dem Auszugprofil versenkten Ruheposition und einer von dem Auszugprofil nach oben abragenden, aufrechten Funktionsposition an dem Auszugprofil beweglich gelagert. In der Ruheposition sind die Halteelemente daher für einen optisch einheitlichen Eindruck unsichtbar im Auszugprofil integriert. Neben dem optisch ansprechenden Gesamtbild der Laderaumabtrennung in der Ruheposition der Halteelemente wird auch die Verletzungsgefahr reduziert, die durch in der Ruheposition nach oben abragende Halteelemente auftreten könnte. Die Halteelemente können entweder manuell in die Ruheposition oder die Funktionsposition - je nach Bedarf - überführt werden, oder sie können automatisch mit der entsprechenden Auszieh- oder Einzugbewegung des Auszugprofiles in die Ruhe- oder die Funktionsposition überführt werden. Die bewegliche Lagerung schließt alle geeigneten Arten von Bewegungen, insbesondere Linear- oder Schwenkbewegungen, mit ein.

In weiterer Ausgestaltung der Erfindung ist den Halteelementen eine Zwangsführungseinrichtung zugeordnet, die auf Höhe der eingezogenen Ablageposition des Auszugprofiles fahrzeugfest positionierte Zwangsführungselemente aufweist, die jedes Halteelement bei Erreichen der Ablageposition des Auszugprofiles in seine versenkte Ruheposition zwingen und bei Ausziehen des Auszugprofiles für eine Bewegung in die Funktionsposition freigeben. Durch die Zwangsführung der Halteelemente werden diese beim Ausziehen des Auszugprofiles zwangsläufig in die Funktionsposition überführt und beim Zurückziehen des Auszugprofiles in die Ablageposition in umgekehrter Weise zwangsläufig wieder in ihre versenkte Ruheposition gebracht.

In weiterer Ausgestaltung der Erfindung ist jedes Halteelement in Richtung seiner Funktionsposition federbelastet. Dadurch wird eine äußerst einfache automatische Überführung des Halteelementes in die Funktionsposition erreicht.

In weiterer Ausgestaltung der Erfindung ist jedes Halteelement schwenkbeweglich gelagert und weist eine mit einem fahrzeugfest positionierten Anschlag im Bereich der Ablageposition des Auszugprofiles zusammenwirkende Führungskontur auf. Der Anschlag und die Führungskontur sind Teil der Zwangsführungseinrichtung, die eine automatische Überführung des jeweiligen Halteelementes in die Ruhe- oder die Funktionsposition abhängig von der entsprechenden Aus- oder Einzugbewegung des Auszugprofiles bewirken.

In weiterer Ausgestaltung der Erfindung weist jede fahrzeugfeste Halterung ein die Halteelemente formschlüssig sicherndes Einsteckprofil auf, das sich in Fahrtrichtung nach vorne schlüsselartig verjüngt. Die Halteelemente können daher in ihrer Funktionsposition beim Hochziehen des Auszugprofiles von unten her in die Einsteckprofile eingesteckt werden und für eine formschlüssige Verankerung in den Einsteckprofilen in Fahrtrichtung nach vorne gedrückt werden. Falls das Auszugprofil im ausgezogenen Funktionszustand des Flächengebildes durch geeignete Stützanordnungen selbsttätig in dieser Position gehalten wird, so ist ein manuelles Nachvornedrücken in den schlüsselartig verjüngten Bereich des Einsteckprofiles nicht notwendig, da das Auszugprofil im Crashfall bei einer entsprechenden Belastung des flexiblen Flächengebildes zwangsläufig nach vorne in die Verankerungsposition gedrückt wird.

In weiterer Ausgestaltung der Erfindung weist jede fahrzeugfeste Halterung in Abstand unterhalb des Einsteckprofiles eine mit einem auf die - in Steckrichtung gesehen - Außenkontur des Halteelementes abgestimmten Durchtritt versehene Aufnahmeblende auf, die parallel zu dem Einsteckprofil und damit etwa parallel mit dem Dachhimmelbereich in Fahrzeuglängsrichtung verschiebbar gelagert ist. Dadurch wird eine verdeckte Anordnung des eigentlich zur Sicherung der Halteelemente dienenden Einsteckprofiles für jedes Halteelement geschaffen, die einen optisch ansprechenden, weitgehend glattflächigen Dachhimmelbereich ermöglicht.

In weiterer Ausgestaltung der Erfindung ist die Aufnahmeblende mittels einer Schlittenführung verschiebbar gelagert. Dies ist eine besonders einfache und funktionssichere Ausgestaltung.

In weiterer Ausgestaltung der Erfindung weist die Schlittenführung zwei oberhalb des Einsteckprofiles fahrzeugfest positionierte, zueinander parallele Führungsprofile auf, auf denen einstückig mit der Aufnahmeblende verbundene Führungsarme gleitbeweglich gelagert sind. Diese Ausgestaltung schafft eine stabile Festlegung und Stützung der Aufnahmeblende. Die einstückige Gestaltung von Führungsarmen und Aufnahmeblenden erlaubt die Herstellung als gemeinsame Baueinheit aus Kunststoff.

Weitere Vorteile und Merkmale der Erfindung ergeben sich aus den Ansprüchen sowie aus der nachfolgenden Beschreibung von bevorzugten Ausführungsbeispielen der Erfindung, die anhand der Zeichnungen dargestellt sind.
- Fig. 1: zeigt schematisch in einer Ansicht von hinten eine Ausführungsform einer erfindungsgemäßen Laderaumabtrennung in ihrer abgelegten Ruheposition in einem Fahrzeuginnenraum eines Kraftfahrzeugs hinter einer Fondsitzanordnung,
- Fig. 2: die Laderaumabtrennung nach Fig. 1 in teilweise ausgezogenem Zustand des flexiblen Flächengebildes,
- Fig. 3: die Laderaumabtrennung nach den Fig. 1 und 2 in ausgezogenem Funktionszustand des flexiblen Flächengebildes,
- Fig. 4: in vergrößerter Längsschnittdarstellung einen Teilbereich der Laderaumabtrennung auf Höhe eines in seiner Ablageposition befindlichen Auszugprofiles,
- Fig. 5: den Ausschnitt nach Fig. 4, wobei das Auszugprofil sich in einer geringfügig nach oben gezogenen Zwischenposition befindet,
- Fig. 6: die Laderaumabtrennung nach den Fig. 4 und 5 in einer weiteren Zwischenposition, in der ein Halteelement in seine Funktionsposition verschwenkt ist,
- Fig. 7: eine weitere Ausführungsform einer erfindungsgemäßen Laderaumabtrennung im Bereich einer dachseitigen fahrzeugfesten Halterung, in die ein Halteelement eines Auszugprofiles der Laderaumabtrennung hineinragt,
- Fig. 8: in perspektivischer Darstellung die Laderaumabtrennung nach den Fig. 1 bis 6 im Bereich einer fahrzeugfesten Halterung, in die das Auszugprofil mittels eines Halteelementes eingesteckt ist und
- Fig. 9: eine Draufsicht auf ein Einsteckprofil der fahrzeugfesten Halterung nach Fig. 8 mit von unten her eingeschobenem Halteelement.

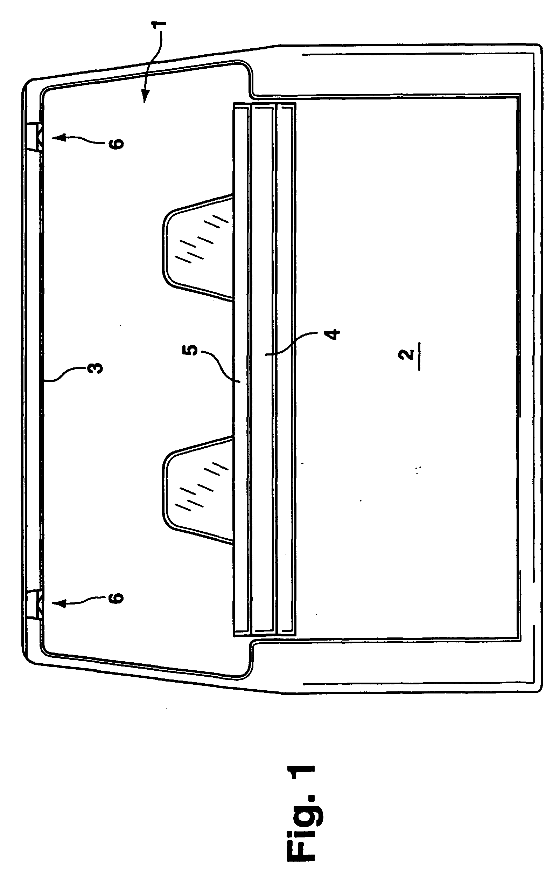

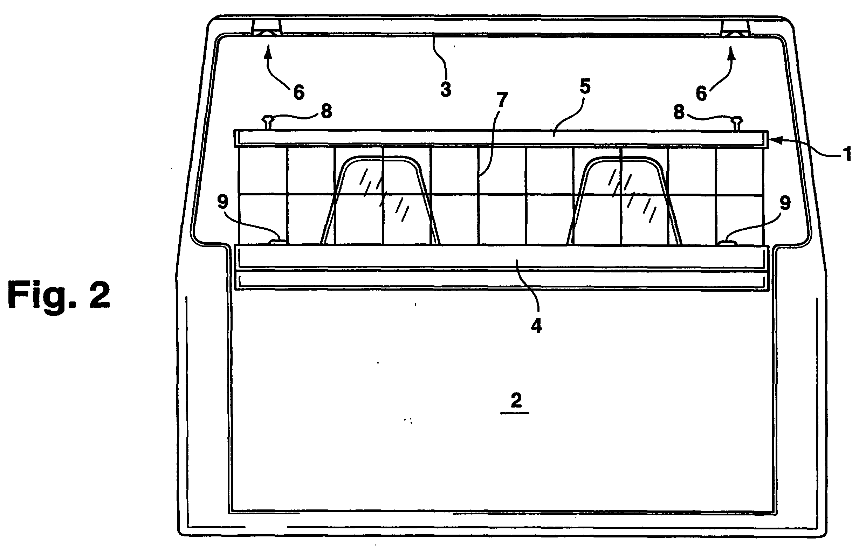

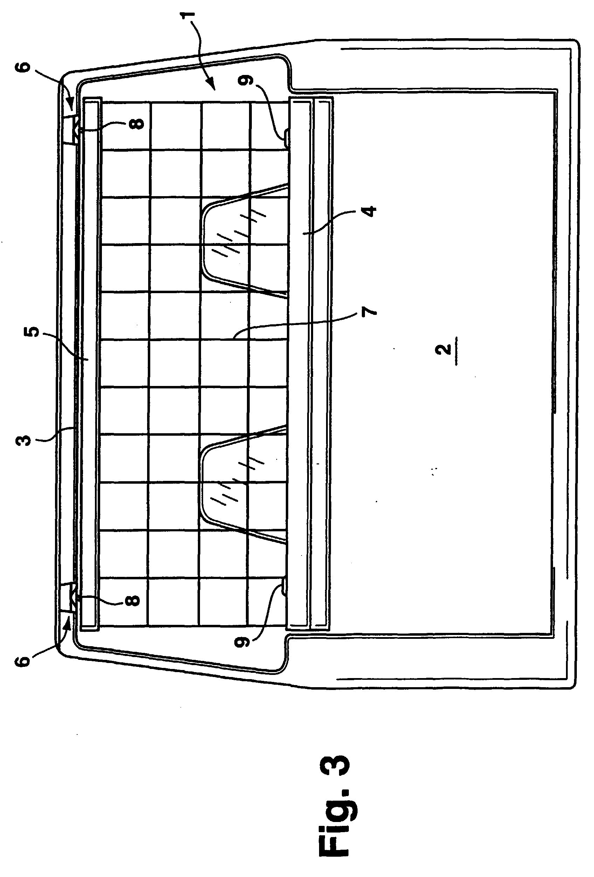

Eine Laderaumabtrennung nach den Fig. 1 bis 6 und 8, 9 weist in grundsätzlich bekannter Weise ein Kassettengehäuse 4 auf, das in einem Fahrzeuginnenraum 1 an einer Rückseite einer Rückenlehnenanordnung einer Fondsitzanordnung 2 fahrzeugfest positioniert ist. Der Fahrzeuginnenraum 1 ist durch die Laderaumabtrennung 4, 5, 7 in einen Fahrgastraum oder einen Laderaum über die gesamte Höhe des Fahrgastraumes 1 unterteilbar. Die Laderaumabtrennung weist ein als flexibles Flächengebilde dienendes Trenn-Netz 7 auf, das auf einer in dem Kassettengehäuse 4 gelagerten Rollowelle auf- und abwickelbar gehalten ist. In einem frontseitigen Stirnbereich ist das Trenn-Netz 7 mit einem formstabilen Auszugprofil 5 verbunden, das sich quer über die gesamte Breite des Trenn-Netzes 7 erstreckt. Das Auszugprofil 5 ist mit zwei zueinander beabstandeten Halteelementen 8 versehen, die in ihrer Funktionsposition (Fig. 2 und 3) vertikal von einer Oberkante des Auszugprofiles 5 aus nach oben abragen. Die beiden Halteelemente 8 tauchen in dem ausgezogenen Funktionszustand des Trenn-Netzes 7 (Fig. 3) in jeweils eine fahrzeugfeste Halterung 6 ein, die in einem horizontalen Dachhimmelbereich 3 des Fahrzeugdaches angeordnet sind. Die Halterungen 6 sind oberhalb einer Dachhimmelverkleidung des Dachhimmelbereiches 3 mit entsprechenden Karosserieteilen des Dachbereiches des Kraftfahrzeugs verbunden. Eine Unterseite der nachfolgend noch näher beschriebenen Halterungen 6 schließt etwa bündig mit der Dachhimmelverkleidung des Dachhimmelbereiches 3 ab, so daß die Halterungen 6 hinter der Dachhimmelverkleidung versenkt angeordnet sind.

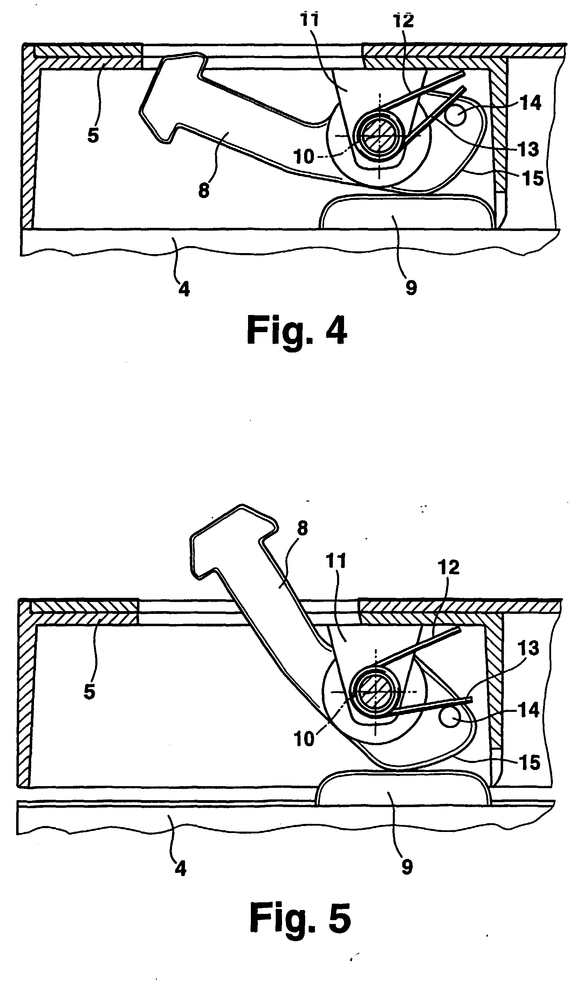

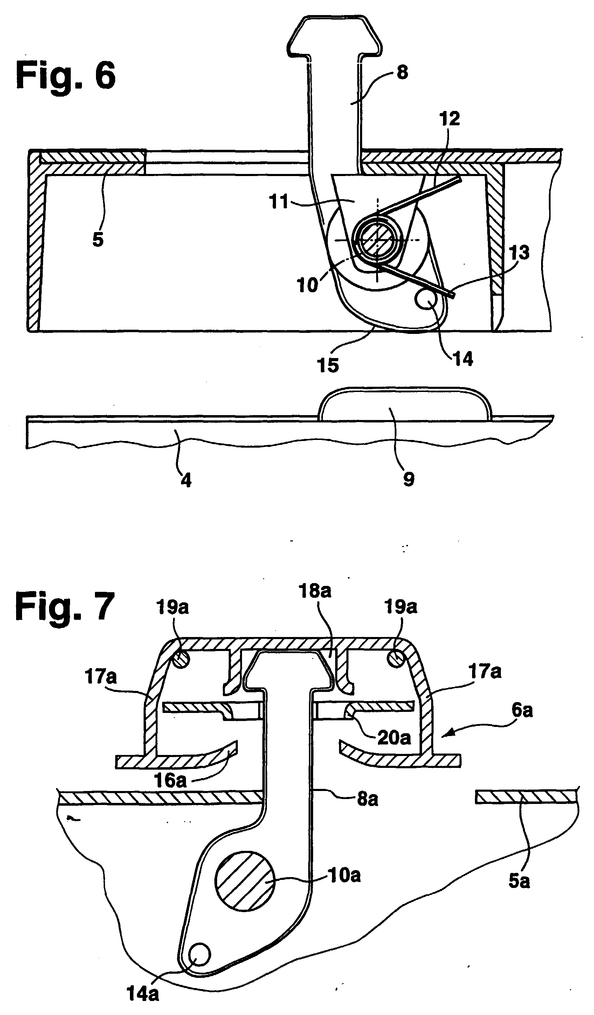

Das Auszugprofil ist zumindest im Bereich der Anordnung der beiden Halteelemente 8, d.h. in den gegenüberliegenden seitlichen Bereichen, als abschnittsweise nach unten offenes Hohlprofil gestaltet. Jedes Halteelement 8 ist um eine horizontale und in Fahrzeuglängsrichtung ausgerichtete Schwenkachse 10 in dem Auszugprofil 5 schwenkbeweglich gelagert, so daß das Halteelement 8 etwa in einer vertikalen Fahrzeugquerebene schwenkbeweglich ist. Längs dieser Ebene ist in der Oberseite des Auszugprofiles 5 ein nicht näher bezeichneter Austrittschlitz vorgesehen, durch den das Halteelement 8 aus der versenkten Ruheposition (Fig. 4) in die aufrechte Funktionsposition (Fig. 6) nach außen hindurchtreten kann. In der aufrechten Funktionsposition schlägt das Halteelement 8 an einem seitlichen Anschlagrand des Austrittschlitzes an (Fig. 4 bis 6). Jedes Halteelement 8 ist durch eine zu der Schwenkachse 10 koaxial angeordnete Schenkelfeder 12, 13 in Ausschwenkrichtung federbelastet, wobei ein erster Federschenkel 12 sich an einer Innenfläche der Oberseite des Auszugprofiles 5 und ein zweiter Federschenkel 13 sich an einem einstückig an dem Halteelement 8 angeformten Stützbolzen 14 abstützt.

Um abhängig von einer Bewegung des Auszugprofiles 5 in der Ablageposition des Auszugprofiles 5 eine Versenkung des Halteelementes 8 und bei einem beginnenden Ausziehen des Auszugprofiles 5 nach oben aus der Ablageposition heraus eine automatische Aufrichtung des Halteelementes 8 zu erzielen, ist gemäß den Fig. 4 bis 6 dem Halteelement 8 eine Zwangsführungseinrichtung 9, 15 zugeordnet, die durch eine an einer Unterseite des Halteelementes 8 vorgesehene Führungskontur 15 einerseits und eine an einer Oberseite des Kassettengehäuses 4 angeordnete Anschlagfläche 9 gebildet ist. Die Führungskontur 15 verläuft relativ zu der Schwenkachse 10 des Halteelementes 8 wie auch relativ zur Bewegungsrichtung des Auszugprofiles 5 derart geneigt und gekrümmt, daß bei einer Absenkbewegung des Auszugprofiles 5 und einem Auftreffen der Führungskontur 15 auf die Anschlagfläche 9 auf das Halteelement 8 ein Drehmoment in Richtung der Ruheposition des Halteelementes 8 ausgeübt wird. Durch die entsprechende Gestaltung der Führungskontur 15 wird das Halteelement 8 bis zum Erreichen der Ablageposition des Auszugprofiles 5 vollständig in die versenkte Ruheposition gemäß Fig. 4 überführt. Bei einer erneuten Auszugbewegung des Auszugprofiles 5 nach oben geraten die Führungskontur 15 und die Anschlagfläche 9 des fahrzeugfest positionierten Kassettengehäuses 4 außer Anlage, wodurch die Schenkelfeder 12, 13 das Halteelement 8 automatisch in die Funktionsposition aufrichtet.

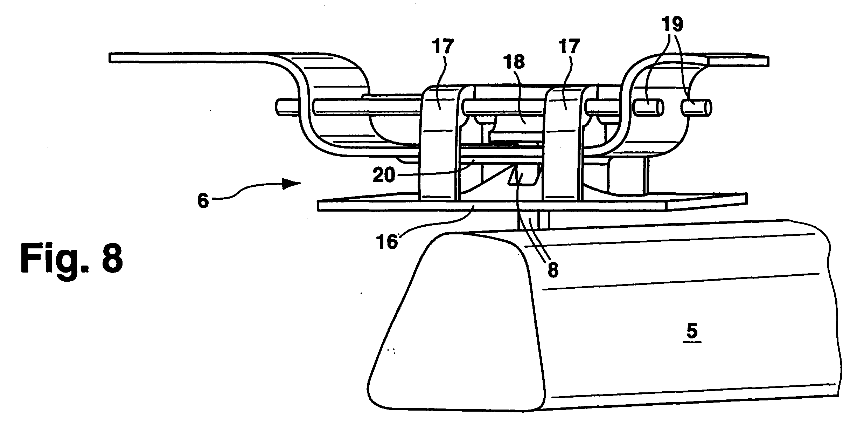

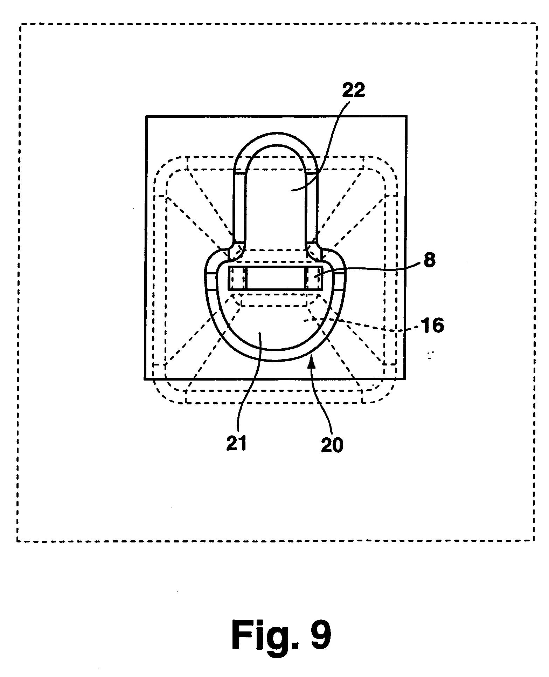

Jede fahrzeugfeste Halterung 6 ist unmittelbar oberhalb der Dachhimmelverkleidung mit einer plattenartigen Aufnahmeblende 16 versehen, die in ihrem mittleren Bereich trichterartig nach oben ausgebuchtet ist (Fig. 8, 9). Der trichterartig ausgebuchtete Bereich der Aufnahmeblende 16 ist mit einem schlitzförmigen Durchtritt versehen, dessen Abmessungen etwas größer als die Außenkontur des hammerartigen Kopfes des Halteelementes 8 - in einer Draufsicht in Steckrichtung entsprechend Fig. 9 gesehen - gestaltet sind. Die trichterförmige Ausbuchtung stellt eine Zentrierhilfe zum Einstecken des hammerartigen Kopfes des jeweiligen Halteelementes 8 dar. Die Aufnahmeblende 16 ist parallel unmittelbar hinter der Dachhimmelverkleidung in Fahrzeuglängsrichtung verschiebbar gelagert. Dazu sind in einem formstabilen, bügelartig gestalteten Trägerteil der Halterung 6, das an einem entsprechenden Rohbaukarosserieteil des Dachbereiches festgelegt ist, zwei in Fahrzeuglängsrichtung ausgerichtete und zueinander beabstandete Führungsprofile 19 in Form von Rundstangen vorgesehen, an denen die Aufnahmeblende 16 mit Hilfe von vier nach oben ragenden und die Führungsprofile 19 gleitbeweglich umgreifenden Führungsarmen 17 gehalten ist. Die Führungsarme 17 sind einstückig an der Aufnahmeblende 16 angeformt und ragen von dieser aus nach oben ab. Zwischen den Führungsarmen 17 erstreckt sich ein Sockelteil 18, der einstückig mit den Führungsarmen 17 und der Aufnahmeblende 16 gestaltet ist und der einen nach unten offenen Aufnahmebereich für die Abstützung des hammerartigen Kopfes des Halteelementes 8 nach oben aufweist.

Die Gestaltung des Aufnahmebereiches des Sockelteiles 18 ist anhand des ähnlichen Ausführungsbeispiels gemäß Fig. 7 erkennbar. Die dort dargestellte fahrzeugfeste Halterung 6a wie auch das Halteelement 8a in dem Auszugprofil 5a entsprechen von Funktion und technischer Gestaltung her dem Ausführungsbeispiel nach den Fig. 1 bis 6, 8 und 9, wobei lediglich gestalterische Änderungen der Führung der Aufnahmeblende 16 sowie des Fußbereiches des Halteelementes 8a vorgesehen sind. Um die funktionsgleiche Bauweise herauszustellen, sind beim Ausführungsbeispiel nach Fig. 7 die gleichen Bezugszeichen lediglich unter jeweiliger Hinzufügung des Buchstabens a gewählt worden.

Das Trägerteil der Halterung 6 bildet in einem Durchtrittsbereich für das Halteelement 8 ein Einsteckprofil 20, das eine sich schlüsselartig verjüngende Öffnung 21, 22 (Fig. 9) aufweist. Dabei schließt an einen halbkreisartigen Öffnungsbereich 21, dessen Breite größer ist als die Breite des hammerartigen Kopfes des Halteelementes 8, in Fahrzeuglängsrichtung nach vorne ein abgestuft verjüngter Öffnungsbereich 22 an, dessen Breite geringfügig größer ist als die Breite des Halteelementes 8 unterhalb des hammerartigen Kopfes. Sobald das Halteelement 8 daher in Fahrzeuglängsrichtung nach vorne in den verjüngten Öffnungsbereich 22 unter gleichzeitiger Verschiebung der Aufnahmeblende 16 gedrückt ist, ist es gegen ein Herausziehen nach unten formschlüssig in dem Einsteckprofil 20 verankert. Der Sockelteil 18 befindet sich auf der der trichterförmigen Ausbuchtung gegenüberliegenden Seite des Einsteckprofiles 20 und bildet somit den endseitigen Anschlag für die Einsteckbewegung des Halteelementes 8.

Um das Trenn-Netz 7 somit in seinen ausgezogenen Funktionszustand aus der Ruheposition gemäß Fig. 1 zu überführen, wird das Auszugprofil 5 nach oben gezogen, wodurch automatisch die Halteelemente 8 in ihre aufrechte Funktionsposition gedrückt werden. Das Auszugprofil 5 wird soweit nach oben gezogen oder gedrückt, bis die Halteelemente 8 in die trichterförmigen Ausbuchtungen der Aufnahmeblende 16 jeder Halterung 6 im Dachhimmelbereich 3 eintauchen. Die Halteelemente 8 und das Auszugprofil 5 werden weiter nach oben gedrückt, bis die Stirnenden der hammerartigen Köpfe der Halteelemente 8 in den Aufnahmebereichen der Sockelteile 18 anschlagen. Anschließend wird das Auszugprofil 5 geringfügig in Fahrtrichtung nach vorne gedrückt, wodurch die Halteelemente 8 in die verjüngten Öffnungsbereiche 22 der Einsteckprofile 20 eintreten und mit ihren hammerartigen Köpfen die Ränder dieses Öffnungsbereiches 22 hintergreifen. Dadurch wird eine formschlüssige Verankerung in den Einsteckprofilen 20 erzielt. Für ein erneutes Absenken des Trenn-Netzes 7 in seine eingezogene Ruheposition und das Absenken des Auszugprofiles in seine Ablageposition wird das Auszugprofil 5 zunächst in Fahrtrichtung nach hinten gezogen oder gedrückt, bis die Halteelemente 8 wieder auf Höhe des vergrößerten Öffnungsbereiches 21 jedes Einsteckprofiles 20 positioniert sind. Anschließend wird das Auszugprofil 5 nach unten abgesenkt, wodurch die Führungskonturen 15 der Halteelemente 8 beim Erreichen des Kassettengehäuses 4 auf den Anschlagflächen 9 zur Anlage kommen und die Halteelemente 8 in die versenkte Ruheposition überführen. Da die Rollowelle in Einzugrichtung des Trenn-Netzes federbelastet ist, erfolgt die Rückholbewegung des Trenn-Netzes 7 und die entsprechende Absenkbewegung des Auszugprofiles 5 bis in die Ablageposition federkraftunterstützt durch die entsprechende Federanordnung der Rollowelle.

## Patentansprüche

1. Laderaumabtrennung für ein Kraftfahrzeug mit wenigstens einem auf einer fahrzeugfest gelagerten Rollowelle auf- und abwickelbar angeordneten, flexiblen Flächengebilde, das in einem frontseitigen Stirnbereich mit einem formstabilen, sich über die gesamte Breite des Flächengebildes erstreckenden Auszugprofil versehen ist, das Halteelemente zur lösbaren Festlegung des Auszugprofiles im ausgezogenen Funktionszustand des Flächengebildes an fahrzeugfesten Halterungen in einem Dachbereich des Kraftfahrzeugs aufweist, dadurch gekennzeichnet, daß die Halteelemente (8, 8a) im ausgezogenen Funktionszustand des Flächengebildes (7) über eine Oberkante des Auszugprofiles (5, 5a) nach oben abragen, und daß die korrespondierenden fahrzeugfesten Halterungen (6, 6a) zur Aufnahme der Halteelemente (8, 8a) in einem horizontalen Dachhimmelbereich (3) in Abstand zu seitlichen Dachrahmenteilen des Dachbereiches des Kraftfahrzeugs positioniert sind.

2. Laderaumabtrennung nach Anspruch 1, dadurch gekennzeichnet, daß die Halteelemente (8, 8a) zwischen einer in dem Auszugprofil (5, 5a) versenkten Ruheposition und einer von dem Auszugprofil nach oben abragenden, aufrechten Funktionsposition an dem Auszugprofil (5, 5a) beweglich gelagert sind.

3. Laderaumabtrennung nach Anspruch 2, dadurch gekennzeichnet, daß den Halteelementen (8) eine Zwangsführungseinrichtung (9, 15) zugeordnet ist, die auf Höhe der eingezogenen Ablageposition des Auszugprofiles (5) fahrzeugfest positionierte Zwangsführungselemente (9) aufweist, die jedes Halteelement (8) bei Erreichen der Ablageposition des Auszugprofiles (5) in seine versenkte Ruheposition zwingen und bei Ausziehen des Auszugprofiles (5) eine Bewegung in die Funktionsposition freigeben.

4. Laderaumabtrennung nach einem der vorhergehenden Ansprüche, dadurch gekennzeichnet, daß jedes Halteelement (8, 8a) in Richtung seiner Funktionsposition federbelastet ist.

5. Laderaumabtrennung nach Anspruch 3, dadurch gekennzeichnet, daß jedes Halteelement (8) schwenkbeweglich gelagert ist und eine mit einem fahrzeugfest positionierten Anschlag (9) im Bereich der Ablageposition des Auszugprofiles (5) zusammenwirkende Führungskontur (15) aufweist.

6. Laderaumabtrennung nach einem der vorhergehenden Ansprüche, dadurch gekennzeichnet, daß jede fahrzeugfeste Halterung (6, 6a) ein die Halteelemente (8, 8a) formschlüssig sicherndes Einsteckprofil (20, 20a) aufweist, das sich in Fahrtrichtung nach vorne schlüsselartig verjüngt.

7. Laderaumabtrennung nach Anspruch 6, dadurch gekennzeichnet, daß jede fahrzeugfeste Halterung (6, 6a) in Abstand unterhalb des Einsteckprofiles (20, 20a) eine mit einem auf die - in Steckrichtung gesehen - Außenkontur des Halteelementes (8, 8a) abgestimmten Durchtritt versehene Aufnahmeblende (16, 16a) aufweist, die parallel zu dem Einsteckprofil (20, 20a) und damit parallel zu dem Dachhimmelbereich (3) in Fahrzeuglängsrichtung verschiebbar gelagert ist.

8. Laderaumabtrennung nach Anspruch 7, dadurch gekennzeichnet, daß die Aufnahmeblende (16) mittels einer Schlittenführung (17, 19) verschiebbar gelagert ist.

9. Laderaumabtrennung nach Anspruch 8, dadurch gekennzeichnet, daß die Schlittenführung zwei oberhalb des Einsteckprofiles (20) fahrzeugfest positionierte, zueinander parallele Führungsprofile (19) aufweist, auf denen einstückig mit der Aufnahmeblende (16) verbundene Führungsarme (17) gleitbeweglich gelagert sind.
